# EUROPEAN PATENT APPLICATION

(11) **EP 0 562 379 A1**
(43) Date of publication of application: **29.09.1993**
(21) Application number: 93103927.5
(22) Date of filing: 11.03.1993
(51) Int. Cl.: H04N 9/64, H04N 7/18, G09B 21/00

(54) **Improved electronic enlarger for the purblind**

(30) Priority: 27.03.1992 IT TO920274
(71) Applicant: SELECO S.p.A., I-33170 Pordenone (IT)
(72) Inventor: Zecchin, Massimo, I-33185 Maniago (PN) (IT)
(74) Representative: Dini, Roberto, Dr. Ing.

(57) **Abstract**

The present invention refers to an improved electronic enlarger for the purblind, comprising a telecamera for filming an image and a display device for displaying it; the main characteristic of the invention consists in that said display device is equipped with switching means and is able to display upon choice the image filmed by the telecamera in black and white, or in the colour green, or in the colour amber.

## Description

The present invention refers to an improved electronic enlarger for the purblind, comprising a telecamera for filming an image and a display device for displaying it.

Electronic enlargers for the purblind of the described type are known; they are composed of a support that sustains a display device and a telecamera equipped with a powerful zoom lens; the image filmed by the telecamera, generally written text, conveniently enlarged due to the zoom, is reproduced on the screen of the display device, generally consisting of a monitor or a television.

The purblind have various pathologic characteristics, that is to say that some are able to see only, or better, still certain colours, for example green, or amber (amber being the colour to which the human eye is generally most sensitive). Others however are only able to see in black and white, whereupon for these it is useless, moreover it could worsen the situation to represent the image in colour.

These different categories mean that normally the enlarger is supplied, upon choice, with a black and white monitor, or with a green phosphor monitor, or with an amber phosphor monitor; furthermore it would be convenient to have the availability of different tones of amber, in order to optimise the situation in function with the visual characteristics of the particular purblind subject. These facts naturally represent from a productive point of view complications and therefore greater costs.

The aim of the present invention is that of illustrating an improved electronic enlarger for the purblind that obviates the mentioned drawbacks.

For allowing such aims the present invention has as its subject an improved electronic enlarger for the purblind, comprising a telecamera for filming an image and a display device for displaying it, characterised in that said display device is equipped with switching means and is able to display upon choice the image filmed by the telecamera in black and white, or in the colour green, or in the colour amber.

Further aims and advantages of the present invention will result in being clear from the detailed description that follows and from the annexed drawings, supplied purely as an explanatory and non-limiting example, wherein:

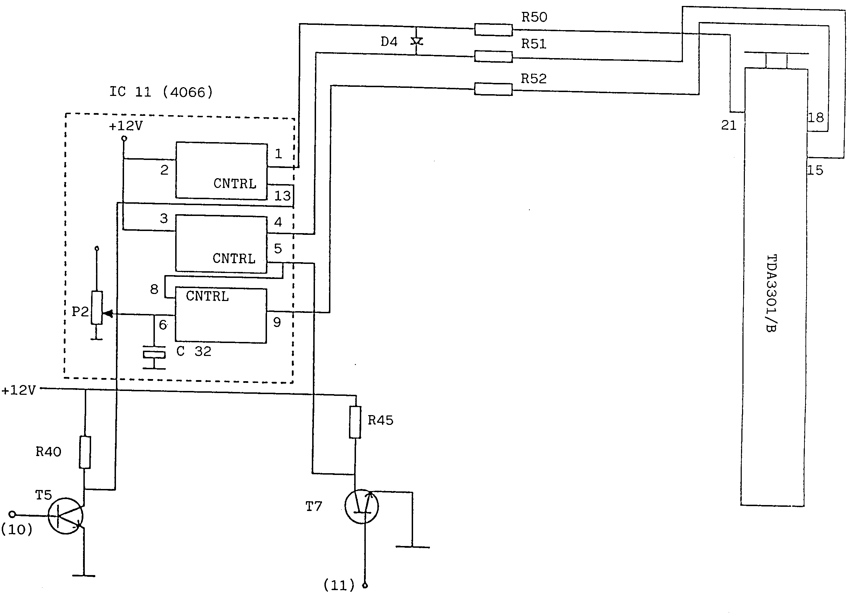

figure 1 represents a part of the electric diagram of the enlarger according to the invention.

The enlarger includes as display means a colour television, and, due to electronic switching means, allows to vary the display hue upon choice from black and white, green and amber; in the last case the tone can also be regulated manually.

In the figure it is noted:
- an integrated circuit (IC11) of the type 4066, comprising 4 electronic switches, only three of which are utilised for the switching of the colour and are represented in the figure; input control (CNTRL) terminals (5, 8, 13) of which receive digital control signals, amplified by two transistors T5 and T7, coming from pins 10 and 11 of a micro-controller, not represented in the figure, that may be for example be of the type MC68HC705C8;
- output signals of the three aforementioned switches are connected to the input terminals (15, 18, 21; respectively: output capacity of blue, green and red) of an integrated crominance decoder circuit (TDA 3301/B); between connections of the terminal 15 and of the terminal 21 a known diode (D4) is noted;
- a potentiometer (P2) connected to the input 6 of one of the three switches allows to regulate the relative input voltage.

The functioning of the described circuit is the following:
when the control signal that reaches pin 13 of the integrated circuit IC11 is active, the exit connection 1 is activated and, through the diode D4, also the output connection 4, and the colour green is displayed; when the control signal that reaches pins 5 and 8 of the integrated circuit IC11 is active, the outpur connections 4 and 9 are activated, and the colour amber is displayed; in the absence of input signals the display takes place in black and white.

The potentiometer P2 allows to manually regulate the voltage of pin 6 of the integrated circuit IC11 and thus the tonality of the amber tint is regulated, in order to improve it based on the particular sensibility of the user.

The characteristics of the electronic enlarger subject of the invention result in being clear from the description of the example.

From the given description the advantages of the enlarger subject of the present invention also result in being clear.

In particular they consist in that:
- all the enlargers produced are identical, with clear advantages regarding the simplicity of manufacturing, programming and stocking;
- it is possible regulate in an optimal way the colour amber of the display device, personalising it for the particular user.

It is clear that numerous variations are possible by the skilled-man , to the system described as an example, without departing from the novelty principles inherent in the invention. For example instead of a coloured TV it is clearly possible to utilise a coloured monitor as a display device; for the selection of the colour displayed it is possible act directly on the colour signals matrix; and so on.

## Claims

1. Improved electronic enlarger for the purblind, comprising a telecamera for filming an image and a display device for displaying it, characterised in that said display device is equipped with switching means (IC11, D4) and is able to display upon choice the image filmed by the telecamera in black and white, or in the colour green, or in the colour amber.

2. Improved electronic enlarger, according to claim 1, characterised in that said enlarger comprises a colour display device and that said switching means (IC11, D4) provide for varying the colour with which the image of the display device is reproduced, carrying out opportune changes to the signals reaching the display device.

3. Improved electronic enlarger, according to claim 2, characterised in that said display device is a colour television.

4. Improved electronic enlarger, according to claim 2, characterised in that said display device is a colour monitor.

5. Improved electronic enlarger, according to claim 2, characterised in that said switching means include an integrated switching circuit of the type 4066 (IC11) and a diode (D4).

6. Improved electronic enlarger, according to claim 2, characterised in that said switching means (IC11, D4) are coupled to a crominance decoder (TDA 3301/B).

7. Improved electronic enlarger, according to claim 6, characterised in that said switching means (IC11, D4) are connected to pins 15, 18 and 21 of the integrated crominance circuit TDA 3301/B.

8. Improved electronic enlarger, according to claim 2, characterised in that said switching means (IC11, D4) are coupled to the colour signal matrix circuit.

9. Improved electronic enlarger, according to claim 1, characterised in that said enlarger includes manual regulation means (P2) of the amber hues.

10. Improved electronic enlarger, according to claim 1, characterised in that said enlarger includes a micro-controller (MC68HC705C8) that controls said switching means (IC11, D4).
